(19) **Europäisches Patentamt / European Patent Office / Office européen des brevets**

(11) **EP 3 247 049 A1**

(12) **EUROPEAN PATENT APPLICATION**

(43) Date of publication:
**22.11.2017 Bulletin 2017/47**

(51) Int Cl.:
*H04B 5/00* (2006.01)        *H01F 38/14* (2006.01)
*H02J 50/12* (2016.01)

(21) Application number: **16290085.6**

(22) Date of filing: **17.05.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **NXP B.V.**
**5656 AG Eindhoven (NL)**

(72) Inventors:
• **Ozenne, Patrick Andre Yves**
**14906 Caen Cedex 9 (FR)**

• **Kelma, Christophe**
**14906 Caen Cedex 9 (FR)**

(74) Representative: **Krott, Michel**
**NXP Semiconductors**
**Intellectual Property & Licensing**
**High Tech Campus 60**
**5656 AG  Eindhoven (NL)**

Remarks:
Amended claims in accordance with Rule 137(2) EPC.

(54) **WIRELESS ANTENNA STRUCTURE**

(57)    Circuits concerning radio frequency (RF) communication, and particularly near field communication (NFC) and wireless power charging (WPC), are disclosed. The disclosed apparatus includes a first antenna providing a signal path, having at least one loop, between a first pair of nodes. The apparatus also includes a second antenna providing a signal path, having one or more loops, between a second pair of nodes. The second antenna is placed sufficiently close to the first antenna to cause the second antenna to resonate in response to an RF signal being applied to the first pair of nodes by a communication circuit. The two antennas can be connected to an NFC transmitter and a WPC receiver, respectively, through active tuning/matching circuits, which set the resonances of the loops and the corresponding mode of operation (NFC or WPC).

**FIG. 2**

## Description

## OVERVIEW

Aspects of the present disclosure generally relate to apparatuses, devices, and methods for wireless communication. Aspects of some embodiments are directed to communications between (RFID) devices. Radio frequency (RF) identification (RFID) devices have a variety of different applications for wireless communication between devices. RFID devices provide a small, robust, and cheap solution for wireless communications of relatively small amounts of data. This facilitates their use on a large scale, in rugged conditions and in unobtrusive/space-limited locations. RFID applications may include for example, tagging, authentication, cashless payment, and ticketing. One type of RFID, referred to as Near Field Communication (NFC), wirelessly communicates data over short distances (*e.g.*, < 10 cm) between a NFC device and a card or between two NFC devices. The communication between NFC devices is performed using electro-magnetic coupling of loop antenna antennas.

These and other matters have presented challenges to efficiencies of wireless communication, for a variety of applications.

## SUMMARY

Various example embodiments are directed to issues such as those addressed above and/or others which may become apparent from the following disclosure concerning circuits and methods concerning wireless communication. Certain example embodiments involve antenna structures for wireless communication devices, such as NFC devices.

In an example embodiment, an apparatus includes a first antenna providing a signal path, having at least one loop, between a first pair of nodes. The apparatus also includes a second antenna providing a signal path, having one or more loops, between a second pair of nodes. The second antenna is placed sufficiently close to the first antenna to cause the second antenna to resonate in response to an RF signal being applied to the first pair of nodes by a communication circuit.

In another example embodiment, an RF signal is communicated by applying the RF signal to a first antenna having at least one loop on a signal path between a first pair of nodes. Resonation of a second antenna is inductively induced in response to the RF signal being applied to the first antenna. The second antenna includes a signal path with one or more loops between a second pair of nodes.

In a more specific embodiment, an apparatus includes an antenna structure that is shared between multiple communication circuits, such as transmitter for NFC and a receiver for wireless power charging (WPC). The antenna structure includes a first antenna having at least one loop in a signal path between a first pair of nodes. The apparatus also includes a second antenna having one or more loops in a signal path between a second pair of nodes. In a first mode, the second antenna is tuned to a resonant frequency of a carrier signal of an RF signal. A transmitter circuit is configured to transmit the RF signal by applying the RF signal to the first antenna via the first pair of nodes. Resonation of the tuned second antenna is inductively induced in response to the RF signal being applied to the first antenna. In a second mode, the resonant frequency of the second antenna is tuned to a frequency of a WPC signal. A WPC circuit is configured to convert an alternating current (AC) voltage at the second pair of nodes to a direct current (DC) voltage.

Furthermore, in one or more embodiments, the apparatus further comprises the communication circuit, and the communication circuit includes a wireless power converter circuit connected to the second pair of nodes and configured and arranged to convert an AC voltage at the second pair of nodes to a DC voltage.

Furthermore, in one or more embodiments, the apparatus further comprises the communication circuit, and the communication circuit includes a tuning circuit configured and arranged to, in a first mode, set a resonance of the second antenna to a carrier frequency of the RF signal; and in a second mode, set the resonance of the second antenna to a frequency used for wireless power transfer.

Furthermore, in one or more embodiments, the tuning circuit is further configured and arranged to disconnect a power converter circuit from the second pair of nodes in the first mode; and connect the power converter circuit to the second pair of nodes in the second mode.

Furthermore, in one or more embodiments, a resonance of the second antenna is tuned to a carrier frequency of the RF signal.

Furthermore, in one or more embodiments, the first antenna is inductively coupled to the second antenna.

Furthermore, in one or more embodiments, the one or more loops of the second antenna is located within an area defined by the at least one loop of the first antenna.

Furthermore, in one or more embodiments, the apparatus further comprises the communication circuit, and the communication circuit includes a transmitter circuit configured and arranged to apply the signal to the first pair of nodes.

Furthermore, in one or more embodiments, the communication circuit includes a tuning circuit coupled to the second pair of nodes and configured and arranged to adjust a resonance of the second antenna.

Furthermore, in one or more embodiments, the tuning circuit includes a variable capacitor having a first end connected to a first one of the second pair of nodes and a second end connected to a second one of the second pair of nodes.

Furthermore, in one or more embodiments, the communication circuit includes a receiver circuit configured and arranged to receive a second signal via the second pair of nodes.

Furthermore, in one or more embodiments, the transmitter circuit is configured and arranged for near-field-communication.

Furthermore, in one or more embodiments, the signal path of the second antenna includes a greater number of loops than the signal path of the first antenna.

Furthermore, in one or more embodiments, the signal path of the second antenna includes three or more loops and the signal path of the first antenna includes a single loop.

Furthermore, in one or more embodiments, conductive loss exhibited by the signal path of the first antenna is less than conductive loss exhibited by the signal path of the second antenna

The above discussion/summary is not intended to describe each embodiment or every implementation of the present disclosure. The figures and detailed description that follow also exemplify various embodiments.

## BRIEF DESCRIPTION OF FIGURES

Various example embodiments may be more completely understood in consideration of the following detailed description in connection with the accompanying drawings, in which:

FIG. 1 shows a block level diagram of a communication system, configured in accordance with the present disclosure;

FIG. 2 shows a block level diagram of a communication system, configured in accordance with the present disclosure;

FIG. 3 shows an example process for dual-purpose NFC and WPC use of an antenna structure, configured in accordance with the present disclosure.

FIG. 4 shows an example antenna, configured in accordance with the present disclosure; and

FIG. 5 shows an example antenna, configured in accordance with the present disclosure.

While various embodiments discussed herein are amenable to modifications and alternative forms, aspects thereof have been shown by way of example in the drawings and will be described in detail. It should be understood, however, that the intention is not to limit the disclosure to the particular embodiments described. On the contrary, the intention is to cover all modifications, equivalents, and alternatives falling within the scope of the disclosure including aspects defined in the claims. In addition, the term "example" as used throughout this application is only by way of illustration, and not limitation.

## DETAILED DESCRIPTION

Aspects of the present disclosure are believed to be applicable to a variety of different types of apparatuses, systems, and methods involving RF communications. Certain embodiments relate to antenna structures for RF communications. Certain aspects of the present disclosure have been shown to be beneficial when used in the context of NFC. While not necessarily so limited, various aspects may be appreciated through the following discussion of non-limiting examples which use exemplary contexts.

In an example embodiment, an apparatus includes an antenna structure having a first loop antenna and a second loop antenna. A communication circuit is configured to transmit an RF signal by applying the RF signal to the first loop antenna. The second loop antenna is placed sufficiently close to the first loop antenna to inductively couple the second loop antenna to the first loop antenna and cause the second loop antenna to resonate in response to the RF signal being applied to the first loop antenna. The resonant frequency of the second loop antenna may be tuned to the carrier frequency of the RF signal to facilitate resonation in response to application of the RF signal in the first loop antenna. Resonation of the second loop antenna supplements the electromagnetic field emitted by the first loop antenna.

Aspects of the present disclosure recognize that a limiting factor on effective communication distances between an NFC devices is electromagnetic field strength is signals transmitted between the devices. In certain embodiments, the antenna structure having the first and second loop antennas may be used to achieve the same electromagnetic field strength as a single antenna coil using an antenna of smaller size and/or using less energy to drive the antenna. Such embodiments may be particularly applicable to applications, such as mobile communication devices and/or mobile point of sale devices, which may be subject to stringent space restrictions.

Accordingly, in the following description various specific details are set forth to describe specific examples presented herein. It should be apparent to one skilled in the art, however, that one or more other examples and/or variations of these examples may be practiced without all the specific details given below. In other instances, well known features have not been described in detail so as not to obscure the description of the examples herein. For ease of illustration, the same reference numerals may be used in different diagrams to refer to the same elements or additional instances of the same element. Also, although aspects and features may in some cases be described in individual figures, it will be appreciated that features from one figure or embodiment can be combined with features of another figure or embodiment even though the combination is not explicitly shown or explicitly described as a combination.

In some embodiments, the second loop antenna of the antenna structure may be used as a dual-mode antenna shared between multiple communication circuits. Dual-mode operation of the antenna may be used for a variety of applications. As an illustrative example, in some embodiments, an antenna may be used for both NFC and wireless power charging (WPC). Such embodiments may be amenable to implementation with, for example, portable devices such as mobile phones. Wireless charging embodiments may involve, for example, charging approaches set by the Alliance for Wireless Power (A4WP). Various A4WP embodiments operate at 6.78 MHz, which is relatively close to frequencies such as that used in NFC communications, of 13.56 MHz.

In an example embodiment, an apparatus includes an antenna structure having first and second loop antennas as previously described, an NFC circuit, and a WPC circuit. In a first mode, the second loop antenna is tuned to a resonant frequency of a carrier signal of an RF signal. The NFC circuit is configured to transmit the RF signal by applying the RF signal to the first loop antenna. Resonation of the second loop antenna is inductively induced in response to the RF signal being applied to the first loop antenna. In a second mode, the resonant frequency of the second loop antenna is tuned to a frequency of a WPC signal, used for wireless power transfer. The WPC circuit is configured to convert an AC voltage generated at terminals of the second loop antenna to a DC voltage.

Resonant frequency, and other characteristics of each loop antenna, may be adjusted using various circuits and processes. For example, as described with more detail with reference to the figures, resonant frequency of a loop antenna may be adjusted by manipulating capacitance of the loop antenna (*e.g.*, using a variable capacitor placed between terminals of the loop antenna. Similarly, impedance of the loop antenna may be adjusted using a variable resistor placed between terminals of the loop antenna (*e.g.*, to match impedance of a transmitter or receiver circuit).

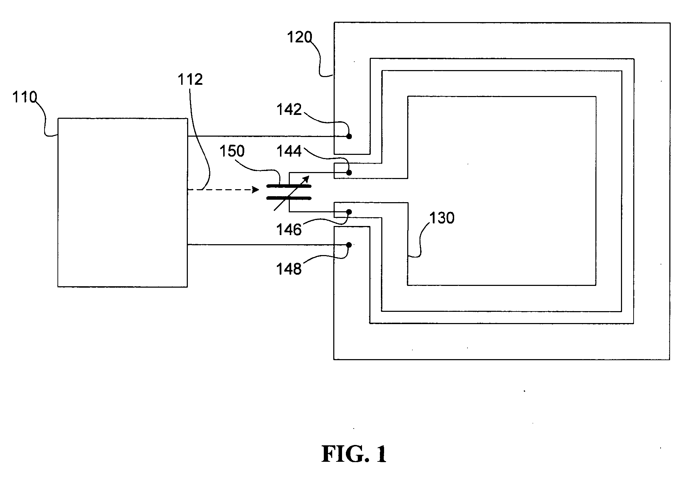

Turning now to the figures, FIG. 1 shows a block level diagram of a communication system, configured in accordance with the present disclosure. The system includes a communication circuit 110 configured to transmit data using a multi-antenna structure. The antenna structure includes a first antenna having an outer loop in a signal path between a first pair of nodes 142 and 148. The antenna also includes a second antenna having one or more inner loops forming a signal path between a second pair of nodes 144 and 146. Resonant frequency (F$_{Res}$) of a loop antenna is specified by the equation,

$$F_{Res} = \frac{1}{2\pi\sqrt{LC}}$$

where L is the total inductance of the antenna and C is the total capacitance of the antenna. In some embodiments, a variable capacitor 150 may be connected to the second antenna, via the second pair of nodes 144 and 146, to facilitate tuning of the resonant frequency. The tunable resonant frequency (F$_{Tunable}$) is specified by the equation,

$$F_{Tunable} = \frac{1}{2\pi\sqrt{L(C_{Loop} + C_{Var})}}$$

where C$_{Loop}$ is the capacitance of the loop and C$_{Var}$ is the capacitance of the variable capacitor. In this example, the communication circuit is configured to adjust capacitance of the variable capacitor 150, via tuning control signal 112, to adjust the resonant frequency of the antenna 130.

The communication circuit 110 is configured to transmit an RF signal by applying the signal to nodes 142 and 148 of the first antenna. The first and second antenna are placed within sufficient close proximity so that AC current of the RF signal in the outer loop 120 induces a current of the RF signal in the inner loop(s) 130. As a result, the strength of the electro-magnetic signal radiated by the antenna structure is increased without increasing conductive losses of the of the signal path (*e.g.*, 120) driven communication circuit 110. In this manner, the antenna size and/or signal drive strength may be reduced, in comparison to that required for a traditional loop antenna with the same output strength. For instance, simulation of an example 60x50 mm antenna arrangement having first and second loop antennas, as described in FIG. 1, has been shown to provide the same electromagnetic field strength as a traditional single coil loop antenna with dimensions 80x50 mm.

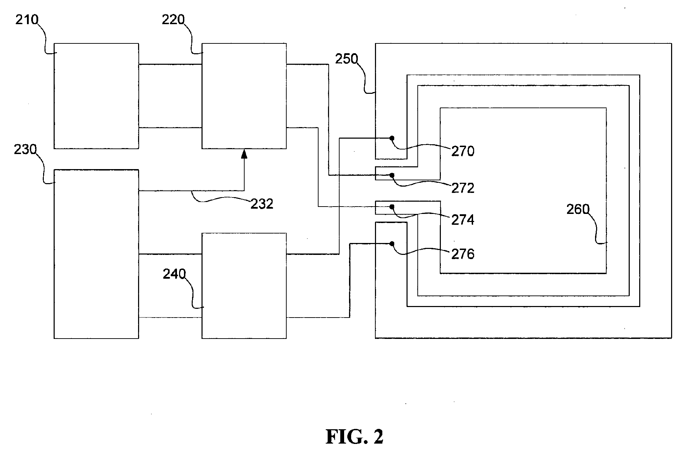

FIG. 2 shows a block level diagram of a communication system, configured in accordance with the present disclosure. The system includes a loop antenna structure that is shared between multiple Rx/Tx front ends. The antenna structure includes a first antenna 250 having an outer loop in a signal path between a first pair of nodes 270 and 276. The antenna also includes a second antenna 260 having one or more inner loops forming a signal path between a second pair of nodes 272 and 274.

In this example, the antenna structure 250/260 is used for NFC and WPC. A NFC transmitter 230 is connected to the outer loop antenna 250 by NFC tuning/matching circuit 240. The NFC tuning/matching circuit 240 adjusts capacitance and/or impedance of the antenna to configure the antenna for use with the NFC transmitter 230. For instance, tuning/matching circuit 240 may adjust be configured to capacitance and/or impedance to improve RF power efficiency while ensuring that current does not exceed a maximum rated output current of the NFC transmitter 230.

The NFC transmitter 230 is configured to transmit an RF signal by applying the RF signal to nodes 270 and 276 of the outer loop antenna 250 via the tuning/matching circuit 240. The antennas 250 and 260 are placed within sufficient close proximity so that AC current of the RF signal in the outer loop antenna 250 induces the RF signal in the inner loop(s) of antenna 260-thereby increasing the RF output of the antenna structure.

A WPC converter circuit 210 is connected to nodes 272 and 274 of the inner loop antenna 260 by WPC tuning/matching circuit 220. The WPC converter circuit 210 is configured to convert an AC voltage, generated at nodes 272 and 274 in response to AC current in the inner loop antenna 260, to a DC voltage. The DC voltage may be increased to a higher voltage, for example, by a step-up converter or boost converter, and used to power the circuits. Excess power may be stored in a battery or capacitor bank for later use.

In this example, the WPC tuning/matching circuit 240 adjusts capacitance and/or impedance of the antenna to configure for dual purposes of NFC transmission and WPC reception. In first mode, the WPC tuning/matching circuit 240 configures the inner loop antenna 260 for transmission of the RF signal, generated by NFC transmitter 230. For instance, as discussed with reference to FIG. 1, capacitance of the inner loop antenna 260 may be configured to set the resonant frequency of the antenna to the carrier frequency of the RF signal. By setting the resonant frequency of the antenna 260 to the carrier frequency, the RF signal is induced in the inner loop antenna 260 more efficiently via application of the RF signal to the outer loop antenna 250. In a second mode, the WPC tuning/matching circuit 240 configures the inner loop antenna 260 for WPC. For instance, the capacitance of the inner loop antenna 260 may be configured to set the resonant frequency of the antenna to a carrier frequency of a signal used for wireless power transfer.

In some embodiments, the WPC tuning/matching circuit 240 may switch between the first and second modes according to a transmission duty cycle. Alternatively or additionally, the WPC tuning/matching circuit 240 may switch between the first and second modes in response to a tuning control signal 232 provided by the NFC transmitter 230. For example, the NFC transmitter 230 may set the tuning control signal to operate the WPC tuning/matching circuit 240 in the first transmit mode whenever a new transmission is pending. After the pending transmission is completed, the NFC transmitter 230 may set the tuning control signal to operate the WPC tuning/matching circuit 240 in the second mode for WPC. Alternatively or additionally, the WPC tuning/matching circuit 240 may switch between the first and second modes according

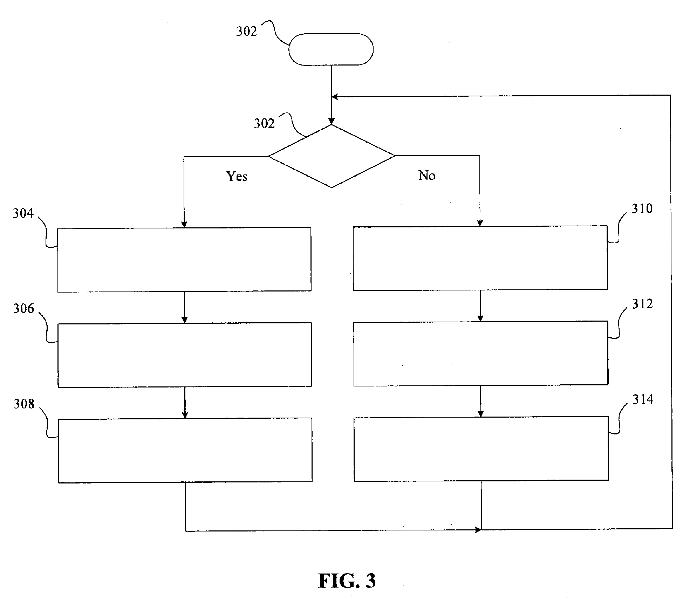

FIG. 3 shows an example process for dual-purpose NFC and WPC use of an antenna structure, configured in accordance with the present disclosure. In this example, the process configures a multi-antenna structure antenna (*e.g.*, 250/260) for either NFC transmission or WPC, responsive status of an NFC transmitter circuit. The process is started at node 300. If there is a pending transmission, at the state of the process, the process is directed to block 304, via decision block 302. At block 304, a power converter (*e.g.*, 210) is disconnected (*e.g.,* by WPC tuning/matching circuit) from an inner loop antenna (*e.g.,* 260). At block 306, resonance frequency of the inner loop antenna is tuned (*e.g.*, by WPC tuning/matching circuit) to a carrier frequency of an RF signal to be transmitted. At block 308, the RF signal is transmitted by applying the RF signal to an outer loop antenna (*e.g.*, 250) of the antenna structure. As previously described, application of the RF signal to the outer loop antenna, induces the RF signal in the inner loop antenna, and thereby increases the signal strength of the RF transmission.

If there is not a pending transmission at decision block 302, the process proceeds to block 310. At block 310, the power converter is connected (*e.g.*, by WPC tuning/matching circuit) to the inner loop antenna. At block 312, resonance frequency of the inner loop antenna is tuned (*e.g.*, by WPC tuning/matching circuit) to a carrier frequency of a signal used for wireless power transfer. At block 314, an AC voltage presents at nodes of the inner loop antenna is converted to a DC voltage. In this example, the DC voltage is also used to charge a power storage device (*e.g.*, a battery or a capacitor bank) at block 314.

The antenna structures shown in FIGs. 1 and 2 may be implemented using various circuits. In different embodiment, the inner and loop antenna (*e.g.*, 130 and 260) and the outer loop antennas (*e.g.*, 120 and 150) of the antenna structures shown in FIG. 1 and 2 may be implemented using various antennas. For instance, antennas may be implemented with different numbers of loops or with different layouts on a printed circuit board or IC.

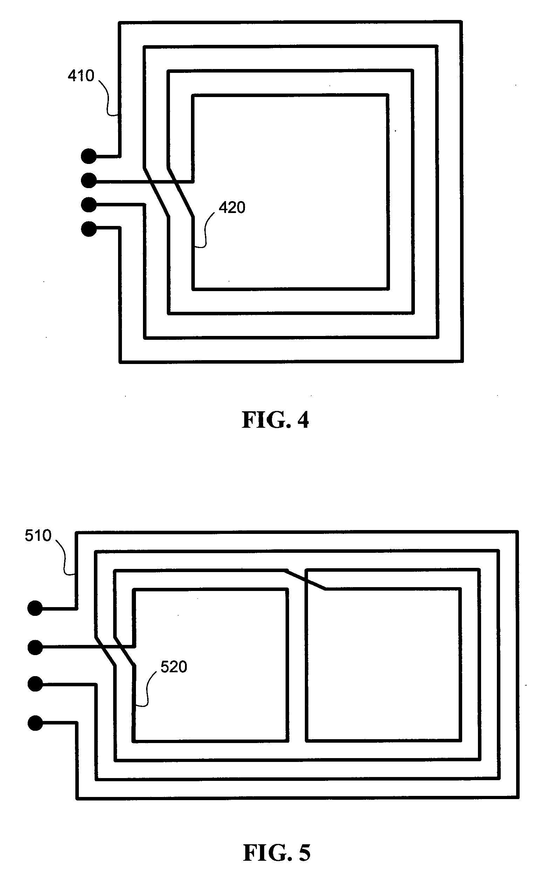

FIG. 4 shows a first example antenna structure consistent with one or more embodiments. In this example, the antenna structure includes an outer loop antenna 410 and an inner loop antenna 420. The inner loop antenna 410 is contained within an inner perimeter of the outer loop antenna 420. In this example, outer loop antenna 410 includes a single loop and the inner loop antenna 420 includes three loops. In some embodiments, the inner loop antenna 410 and/or the outer loop antenna may be adapted to include additional or fewer loops. In this example, the loops of the antenna have a square shape. However, the antennas may be adapted to loops of other shapes including, but not limited to, circles, triangles, and/or rectangles. For example, FIG. 5 shows another example antenna, configured in accordance with one or more embodiments. Similar to the antenna structure shown in FIG. 4 the antenna includes an outer loop antenna 510 and an inner loop antenna 520. In this example, outer loop antenna 510 includes a single rectangular shaped loop. The inner loop antenna 520 includes two rectangular shaped loops surrounding to square shaped inner loops.

The skilled artisan would recognize that various terminology as used in the Specification (including claims) connote a plain meaning in the art unless otherwise indicated. As examples, the Specification describes and/or illustrates aspects useful for implementing the claimed disclosure by way of various circuits or circuitry which may be illustrated as or using terms such as blocks, modules, device, system, unit, controller, and/or other circuit-type depictions (*e.g.*, FIGs. 1 and 2 depict circuits as an arrangement of interconnected blocks as described herein). Such circuits or circuitry are used together with other elements to exemplify how certain embodiments may be carried out in the form or structures, steps, functions, operations, activities, etc. For example, in certain of the above-discussed embodiments, one or more illustrated items in this context represent circuits (*e.g.*, discrete logic circuitry or (semi-)programmable circuits) configured and arranged for implementing these operations/activities, as may be carried out in the approaches shown in FIG. 3. In certain embodiments, such illustrated items represent one or more computer circuitry (*e.g.*, microcomputer or other CPU) which is understood to include memory circuitry that stores code (program to be executed as a set/sets of instructions) for performing process/algorithm as described for example, with reference to FIG. 3 to perform the related steps, functions, operations, activities, *etc.* The Specification may also make reference to an adjective that does not connote any attribute of the structure ("first [type of structure]" and "second [type of structure]") in which case the adjective is merely used for English-language antecedence to differentiate one such similarly-named structure from another similarly-named structure (*e.g.*, "first circuit configured to convert ..." is interpreted as "circuit configured to convert ... "). On the other hand, the Specification may make reference to an adjective that is intended to connote an attribute of the structure (*e.g.*, transmitter circuit), in which case the adjective (*e.g.*, transmitter) is modified to refer to at least a portion of the named structure (*e.g.,* circuit) is configured to have/perform that attribute (*e.g.,* transmitter circuit refers to at least a portion of a server that includes/performs the attribute of transmitting).

Based upon the above discussion and illustrations, those skilled in the art will readily recognize that various modifications and changes may be made to the various embodiments without strictly following the exemplary embodiments and applications illustrated and described herein. For example, methods as exemplified in the Figures may involve steps carried out in various orders, with one or more aspects of the embodiments herein retained, or may involve fewer or more steps. Such modifications do not depart from the true spirit and scope of various aspects of the disclosure, including aspects set forth in the claims.

In some embodiments, a method for communication is provided. A radio frequency (RF) signal is communicated by: applying the RF signal to a first pair of nodes connected to a first antenna providing a signal path with at least one loop between the first pair of nodes;

and inductively inducing a second antenna to resonate in response to the RF signal being applied to the first pair of nodes. The second antenna includes a signal path with one or more loops between a second pair of nodes.

In some embodiments, the method further includes setting resonance of the second antenna to a carrier frequency of the RF signal by adjusting a capacitance of a variable capacitor. The variable capacitor has a first terminal connected to a first one of the second pair of nodes and a second end connected to a second one of the second pair of nodes.

In some embodiments, the first antenna has a resonant frequency that is different from a carrier frequency of the RF signal.

In some embodiments, conductive loss exhibited by the signal path of the first antenna is less than conductive loss exhibited by the signal path of the second antenna.

In some embodiments, the method further includes, in a first mode: tuning resonance of the second antenna to a carrier frequency of the RF signal, and performing the communication of the RF signal. The method also includes, in a second mode: tuning resonance of the second antenna to a carrier frequency of a wireless power signal; and converting an AC voltage at the second pair of nodes to a DC voltage.

**Claims**

1. An apparatus, comprising:

   a first antenna providing a signal path, having at least one loop, between a first pair of nodes; and
   a second antenna providing a signal path, having one or more loops, between a second pair of nodes, at least one portion of the signal path of the second antenna being sufficiently close to a portion of the signal path of the first antenna to cause the second antenna to resonate in response to a radio frequency (RF) signal being applied to the first pair of nodes by a communication circuit.

2. The apparatus as in claim 1, further comprising the communication circuit, wherein the communication circuit includes a wireless power converter circuit connected to the second pair of nodes and configured and arranged to convert an AC voltage at the second pair of nodes to a DC voltage.

3. The apparatus as in any one of claims 1-2, further comprising the communication circuit, wherein the communication circuit includes a tuning circuit configured and arranged to,
   in a first mode, set a resonance of the second antenna to a carrier frequency of the RF signal; and

in a second mode, set the resonance of the second antenna to a frequency used for wireless power transfer.

4. The apparatus as in any one of claims 1-3, wherein the tuning circuit is further configured and arranged to

   disconnect a power converter circuit from the second pair of nodes in the first mode; and

   connect the power converter circuit to the second pair of nodes in the second mode.

5. The apparatus as in any one of claims 1-4, wherein a resonance of the second antenna is tuned to a carrier frequency of the RF signal.

6. The apparatus as in any one of claims 1-5, wherein the first antenna is inductively coupled to the second antenna.

7. The apparatus as in any one of claims 1-6, wherein the one or more loops of the second antenna is located within an area defined by the at least one loop of the first antenna.

8. The apparatus as in any one of claims 1-7, further comprising the communication circuit, wherein the communication circuit includes a transmitter circuit configured and arranged to apply the signal to the first pair of nodes.

9. The apparatus as in any one of claims 1-8, wherein the communication circuit includes a tuning circuit coupled to the second pair of nodes and configured and arranged to adjust a resonance of the second antenna.

10. The apparatus as in any one of claims 1-9, wherein the tuning circuit includes a variable capacitor having a first end connected to a first one of the second pair of nodes and a second end connected to a second one of the second pair of nodes.

11. The apparatus as in any one of claims 1-10, wherein the communication circuit includes a receiver circuit configured and arranged to receive a second signal via the second pair of nodes.

12. The apparatus as in any one of claims 1-11, wherein the transmitter circuit is configured and arranged for near-field-communication.

13. The apparatus as in any one of claims 1-12, wherein the signal path of the second antenna includes a greater number of loops than the signal path of the first antenna.

14. The apparatus as in any one of claims 1-13, wherein the signal path of the second antenna includes three or more loops and the signal path of the first antenna includes a single loop.

15. The apparatus as in any one of claims 1-14, wherein conductive loss exhibited by the signal path of the first antenna is less than conductive loss exhibited by the signal path of the second antenna.

**Amended claims in accordance with Rule 137(2) EPC.**

1. An apparatus, comprising:

   a first antenna (120) providing a signal path, having at least one loop, between a first pair of nodes (142, 148); and
   a second antenna (130) providing a signal path, having one or more loops, between a second pair of nodes (144, 146), at least one portion of the signal path of the second antenna (130) being sufficiently close to a portion of the signal path of the first antenna (120) to cause the second antenna (130) to resonate in response to a radio frequency (RF) signal being applied to the first pair of nodes (142, 148) by a communication circuit (110),
   wherein the one or more loops of the second antenna (130) is contained within an inner perimeter of the at least one loop of the first antenna (120), and
   wherein the communication circuit includes a tuning circuit configured and arranged to,
   in a first mode, set a resonance of the second antenna (130) to a carrier frequency of the RF signal; and
   in a second mode, set the resonance of the second antenna (130) to a frequency used for wireless power transfer.

2. The apparatus as in claim 1, further comprising the communication circuit (110), wherein the communication circuit (110) includes a wireless power converter circuit connected to the second pair of nodes (144, 146) and configured and arranged to convert an AC voltage at the second pair of nodes (144, 146) to a DC voltage.

3. The apparatus as in any one of claims 1-2, wherein the tuning circuit is further configured and arranged to

   disconnect a power converter circuit from the second pair of nodes (144, 146) in the first mode; and
   connect the power converter circuit to the second pair of nodes (144, 146) in the second mode.

4. The apparatus as in any one of claims 1-3, wherein a resonance of the second antenna (130) is tuned to a carrier frequency of the RF signal.

5. The apparatus as in any one of claims 1-4, wherein the first antenna (120) is inductively coupled to the second antenna (130).

6. The apparatus as in any one of claims 1-5, further comprising the communication circuit (110), wherein the communication circuit (110) includes a transmitter circuit configured and arranged to apply the signal to the first pair of nodes (142, 148).

7. The apparatus as in any one of claims 1-6, wherein the communication circuit (110) includes a tuning circuit coupled to the second pair of nodes (144, 146) and configured and arranged to adjust a resonance of the second antenna (130).

8. The apparatus as in any one of claims 1-7, wherein the tuning circuit includes a variable capacitor (150) having a first end connected to a first one of the second pair of nodes (144, 146) and a second end connected to a second one of the second pair of nodes (144, 146).

9. The apparatus as in any one of claims 1-8, wherein the communication circuit includes a receiver circuit configured and arranged to receive a second signal via the second pair of nodes.

10. The apparatus as in any one of claims 6-9, wherein the transmitter circuit is configured and arranged for near-field-communication.

11. The apparatus as in any one of claims 1-10, wherein the signal path of the second antenna (130) includes a greater number of loops than the signal path of the first antenna (120).

12. The apparatus as in any one of claims 1-11, wherein the signal path of the second antenna (130) includes three or more loops and the signal path of the first antenna (120) includes a single loop.

**FIG. 1**

**FIG. 2**

**FIG. 3**

**FIG. 4**

**FIG. 5**

Europäisches
Patentamt

European
Patent Office

Office européen
des brevets

# EUROPEAN SEARCH REPORT

**Application Number**

EP 16 29 0085

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/235508 A1 (ICHIKAWA KATSUEI [JP]) 20 September 2012 (2012-09-20) <br> * paragraph [0030] - paragraph [0040] * <br> * paragraph [0133] - paragraph [0140]; figure 10 * <br> * paragraph [0193] - paragraph [0197]; figure 18 * <br> ----- | 1-15 | INV. <br> H04B5/00 <br> H01F38/14 <br> H02J50/12 |
| A | EP 2 894 757 A1 (RENESAS ELECTRONICS CORP [JP]) 15 July 2015 (2015-07-15) <br> * paragraph [0021] - paragraph [0056]; figure 1B * <br> ----- | 1-15 | |
| A | US 2015/318711 A1 (MOON SUNG-HOON [KR] ET AL) 5 November 2015 (2015-11-05) <br> * paragraph [0125] - paragraph [0147]; figures 19-23 * <br> ----- | 1-15 | |
| | | | TECHNICAL FIELDS SEARCHED (IPC) <br><br> H04B <br> H01F <br> H02J |

The present search report has been drawn up for all claims

| Place of search | Date of completion of the search | Examiner |
|---|---|---|
| Munich | 27 October 2016 | Kokkinos, Titos |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

.................................................................................................

& : member of the same patent family, corresponding
  document

EPO FORM 1503 03.82 (P04C01)

**EP 3 247 049 A1**

## ANNEX TO THE EUROPEAN SEARCH REPORT
## ON EUROPEAN PATENT APPLICATION NO.

EP 16 29 0085

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2016

| Patent document cited in search report | | Publication date | Patent family member(s) | | Publication date |
|---|---|---|---|---|---|
| US 2012235508 | A1 | 20-09-2012 | CN | 102684319 A | 19-09-2012 |
| | | | CN | 104218694 A | 17-12-2014 |
| | | | CN | 105226764 A | 06-01-2016 |
| | | | JP | 5677875 B2 | 25-02-2015 |
| | | | JP | 5908562 B2 | 26-04-2016 |
| | | | JP | 2012196031 A | 11-10-2012 |
| | | | JP | 2015053855 A | 19-03-2015 |
| | | | US | 2012235508 A1 | 20-09-2012 |
| | | | US | 2016028244 A1 | 28-01-2016 |
| EP 2894757 | A1 | 15-07-2015 | CN | 104604077 A | 06-05-2015 |
| | | | EP | 2894757 A1 | 15-07-2015 |
| | | | JP | 5841668 B2 | 13-01-2016 |
| | | | JP | 5989886 B2 | 07-09-2016 |
| | | | JP | 2016027789 A | 18-02-2016 |
| | | | JP | WO2014038265 A1 | 08-08-2016 |
| | | | KR | 20150048761 A | 07-05-2015 |
| | | | US | 2015249360 A1 | 03-09-2015 |
| | | | WO | 2014038265 A1 | 13-03-2014 |
| US 2015318711 | A1 | 05-11-2015 | CN | 104885298 A | 02-09-2015 |
| | | | US | 2015318711 A1 | 05-11-2015 |
| | | | WO | 2014092492 A1 | 19-06-2014 |

EPO FORM P0459

For more details about this annex : see Official Journal of the European Patent Office, No. 12/82